# FASCICULE DE BREVET EUROPEEN

(11) **EP 1 426 748 B1**
(45) Date de publication et mention de la délivrance du brevet: **22.06.2011**
(21) Numéro de dépôt: 03292915.0
(22) Date de dépôt: 25.11.2003
(51) Int. Cl.: G01K 1/14, G01K 7/00, G01K 13/02

(54) **Capteur haute température et procédé d'assemblage de celui-ci**
Hochtemperatursensor und Zusammembauverfahren dafür
High temperature sensor and method of assembling the same

(30) Priorité: 28.11.2002 FR 0214940
(43) Date de publication de la demande: 09.06.2004
(73) Titulaire: SC2N, 78180 Montigny-le-Bretonneux (FR)
(72) Inventeur: Tingaud, Stéphane, 14000 Caen (FR); Sannier, Jean, 14250 Juaye Mondaye (FR); Ramond, Daniel, 14210 Evrecy (FR)
(74) Mandataire: de Lambilly Delorme, Marie Pierre

(56) Documents cités:
- FR-A- 2 822 231

## Description

Actuellement, les capteurs hautes températures sont assemblés, au niveau d'un filtre à particule d'un moteur de type Diesel par exemple, avec des fourreaux céramiques isolants ou bien avec des ciments coulés dans le corps emprisonnant l'élément sensible. Ce procédé de montage de capteurs hautes températures implique des temps de montage plus importants et/ou des risques qualité plus préjudiciables car plus fréquents.

Un but de l'invention est de fournir un capteur haute température apte à être monté de manière rapide et sûre qualitativement.

A cet effet, on prévoit, selon l'invention, un capteur de haute température notamment destiné à être utilisé dans un véhicule automobile, comportant un élément sensible, deux fils conducteurs de courant électrique aptes à connecter l'élément sensible à un câble présentant deux voies, un corps formant une sonde apte à recevoir au moins un sous-ensemble comprenant l'élément sensible et les deux fils conducteurs, le capteur comprenant en outre un carter dit « de montage », en au moins deux parties, apte à être mis en place entre le corps formant la sonde et le sous-ensemble.

Ainsi, la présence d'un carter de montage en deux parties permet d'installer l'élément sensible et les deux fils conducteurs de manière rapide et sûre dans l'une des deux parties puis de monter la deuxième partie sur la première partie afin de construire l'ensemble du carter et de glisser le tout dans le corps formant la sonde de manière à réaliser le capteur haute température. De ce fait, les risques qualitatifs sont réduits au minimum et les temps de montage raccourcis.

Avantageusement, mais facultativement, le capteur présente au moins l'une des caractéristiques suivantes :
- les deux parties du capteur sont symétriques en miroir l'une de l'autre, par rapport à un plan comprenant un axe principal du carter,
- le capteur est en céramique.

On prévoit aussi, selon l'invention, un procédé d'assemblage d'un capteur présentant au moins l'une des caractéristiques précédentes, le procédé comprenant des étapes :
a) soudage des deux fils conducteurs sur l'élément sensible de manière à former le sous-ensemble,
b) montage du sous-ensemble précédent dans l'une parmi les deux parties du carter,
c) assemblage de l'autre parmi les deux parties du carter sur le montage précédent,
d) montage de l'assemblage précédent dans le corps formant la sonde.

Avantageusement, mais facultativement, le procédé présente au moins l'une des caractéristiques suivantes :
- préalablement au montage de l'étape b, les deux fils conducteurs sont soudés à un câble deux voies,
- le procédé comprend en plus une étape de sertissage du corps formant la sonde sur le câble deux voies,
- le procédé comporte en outre une étape d'équipement du capteur avec un écrou apte à permettre le montage du capteur sur le véhicule automobile.

D'autres caractéristiques et avantages de l'invention apparaîtront lors de la description ci-après d'un mode préféré de réalisation. Aux dessins annexés :
- La figure 1 est une vue en trois dimensions d'un capteur selon l'invention.
- La figure 2 est une vue éclatée du capteur de la figure 1.
- Les figures 3a à 3d sont des vues en trois dimensions des différentes étapes d'un procédé de montage d'un capteur selon l'invention.

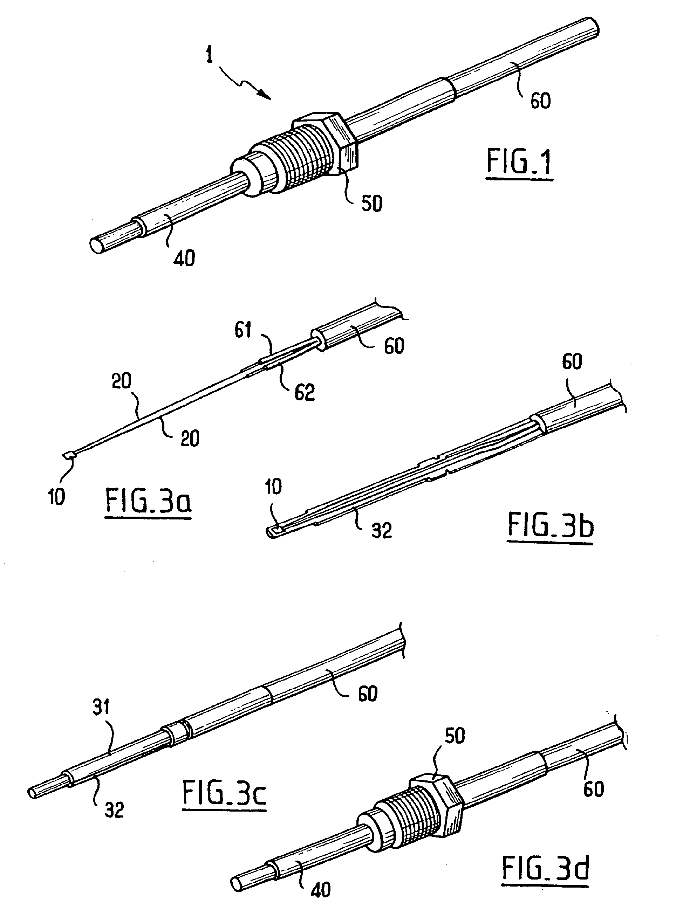

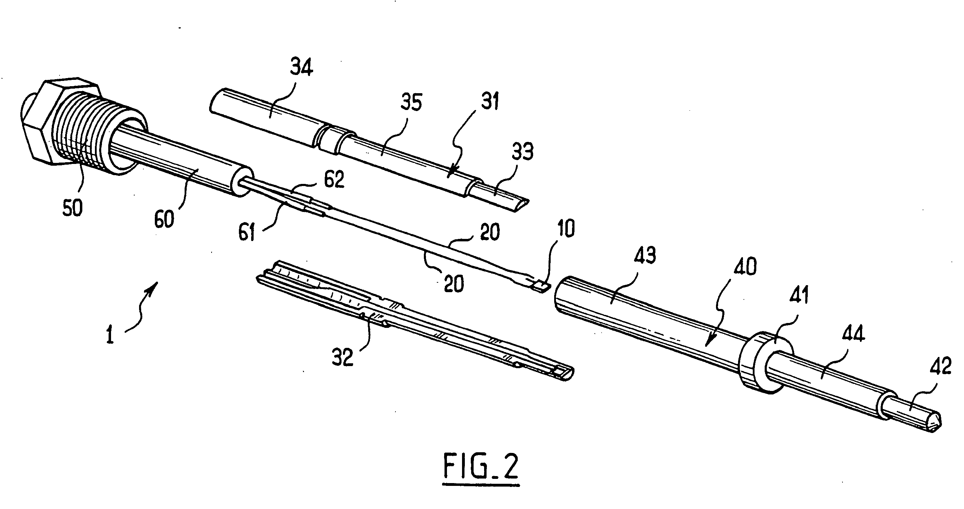

En référence aux figures 1 et 2, un capteur 1 selon l'invention comporte un corps formant la sonde 40 à l'intérieur duquel est logé un carter de montage 31, 32 ainsi qu'un élément sensible 10 apte à mesurer une température. L'élément sensible 10 présente deux fils conducteurs de courant électrique 20 permettant de le relier à un câble 60 présentant deux voies 61 et 62. Chacune des voies 61 et 62 étant reliées à l'élément sensible 10 par un fil conducteur de courant électrique 20.

Le corps formant la sonde 40 est de forme générale cylindrique de révolution, creuse, et présente une extrémité 42 fermée apte à plonger dans l'environnement pour lequel on souhaite mesurer une température. Le corps formant sonde 40 comprend une partie 44 présentant un diamètre supérieur à la partie 42 et relié à celle-ci, puis une partie 41 présentant un diamètre plus important que le diamètre de la partie 44 et faisant office de butée pour un écrou 50 comme cela est décrit ultérieurement. Enfin, le corps formant sonde 40 présente une extrémité 43 opposée à l'extrémité 42, ouverte en bout de manière à pouvoir introduire l'élément sensible 10 monté dans le carter 31, 32. De plus, le capteur 1 présente un écrou 50 de montage sur le véhicule automobile.

Dans un mode préféré de réalisation, le carter 31, 32 est de forme cylindrique de révolution et présente deux parties 31 et 32 symétriques en miroir l'une par rapport à l'autre par rapport à un plan passant par un axe de révolution du carter. Le carter 31, 32 présente une première extrémité 33 dont le diamètre est légèrement inférieur au diamètre de l'extrémité 42 du corps formant sonde 40. De même, le carter 31, 32 présente une partie intermédiaire 35 dont le diamètre est légèrement inférieur au diamètre de la partie 44 du corps formant sonde 40. Et enfin, le carter 31, 32 présente une extrémité 34 opposée à l'extrémité 33 dont le diamètre est légèrement inférieur au diamètre de l'extrémité 43 du corps formant sonde 40. Ainsi, lors du montage, cela permet une coopération de forme entre le carter 31, 32 et le corps formant sonde 40 afin d'assurer un maintien parfait de l'ensemble du capteur.

D'autre part, les parties 31 et 32 du carter sont évidées de manière à pouvoir être aptes à recevoir les fils conducteurs 20 et l'élément sensible 10 comme nous allons le voir.

Maintenant, en référence aux figures 3a à 3d nous allons décrire un procédé préféré de montage du capteur précédemment décrit.

Illustrée en figure 3a, la première étape consiste à assembler l'élément sensible 10 avec les deux fils conducteurs 20. Pour cela, les deux fils conducteurs 20 sont soudés à l'élément sensible 10 à l'une de leurs extrémités. A l'autre extrémité, chacun des fils conducteurs 20 est soudé respectivement à chacune des voies 61, 62 du câble 60.

Dans une deuxième étape, illustrée en figure 3b, l'élément sensible soudé aux deux fils conducteurs 20 est mis en place dans l'évidement de l'une 32 parmi les deux parties formant le carter 31, 32 l'élément sensible 10 étant placé au niveau de l'extrémité 33 dudit carter, les deux fils conducteurs s'étendant le long de l'évidement coaxial de la partie 32 du carter 31, 32. De plus, l'extrémité du câble de voie 60 peut venir en butée contre l'extrémité ouverte 34 du carter 31, 32.

Dans une étape suivante, illustrée en figure 3c, l'autre partie 31 du carter 31, 32 est montée sur la partie 32 de manière à former le carter 31, 32, enfermant ainsi, dans le carter, l'élément sensible 10 et les deux fils conducteurs 20.

Dans une quatrième étape, l'ensemble illustré à la figure 3c est inséré au sein du corps formant sonde 40 de sorte qu'il y ait coopération de forme entre le carter 31, 32 et le corps de sonde 40. Il est à noter que l'extrémité du câble de voie 60 peut pénétrer au sein du corps formant sonde 40 au niveau de l'extrémité 43 de ce dernier. Pour maintenir l'ensemble, le corps formant sonde 40 est alors serti au niveau de son extrémité 43 sur le câble deux voies 60. Enfin, l'écrou 50 est installé de sorte à ce qu'il vienne en butée contre la partie 41 du corps formant sonde 40. Le capteur est ainsi prêt pour être installé sur le véhicule automobile.

Bien entendu, on peut apporter de nombreuses modifications à l'invention sans pour autant sortir du cadre de celle-ci.

## Revendications

1. Capteur de haute température (1), notamment destiné à être utilisé sur un véhicule automobile comprenant :
- un élément sensible (10),
- deux fils conducteurs de courant électrique (20) aptes à connecter l'élément sensible à un câble (60) présentant deux voies (61, 62),
- un corps formant la sonde (40) apte à recevoir au moins un sous-ensemble comprenant l'élément sensible et les deux fils conducteurs,
**caractérisé en ce que** le capteur comprend, en outre, un carter (31, 32) dit « de montage » en au moins deux parties, apte à être positionné entre le corps formant la sonde et le sous-ensemble.

2. Capteur selon la revendication 1, **caractérisé en ce que** les deux parties du capteur sont symétriques en miroir l'une de l'autre, par rapport à un plan comprenant un axe principal du carter.

3. Capteur selon la revendication 1 ou 2, **caractérisé en ce que** le capteur est en céramique.

4. Capteur selon l'une des revendications 1 à 3, **caractérisé en ce que** le carter (31, 32) est étagé.

5. Capteur selon l'une des revendications 1 à 4, **caractérisé en ce que** la section du carter (31, 32) est complémentaire de celle du corps (40).

6. Capteur selon l'une des revendications 1 à 5, **caractérisé en ce que** les deux parties (31, 32) du carter sont évidées pour recevoir les fils conducteurs (20) et l'élément sensible (10).

7. Procédé d'assemblage d'un capteur selon l'une des revendications 1 à 6, **caractérisé en ce que** le procédé présente des étapes de :
a) soudage des deux fils conducteurs sur l'élément sensible de manière à former le sous-ensemble,
b) montage du sous-ensemble précédent dans l'une parmi les deux parties du carter,
c) assemblage de l'autre parmi les deux parties du carter sur le montage précédent, et
d) montage de l'assemblage précédent dans le corps formant la sonde.

8. Procédé selon la revendication 7, **caractérisé en ce que**, préalablement au montage de l'étape b, les deux fils conducteurs sont soudés à un câble deux voies (60).

9. Procédé selon la revendication 8, **caractérisé en ce que** le procédé comprend en plus une étape due :
e) sertissage du corps formant la sonde sur le câble deux voies.

10. Procédé selon l'une des revendications 7 à 9, **caractérisé en ce que** le procédé comporte en outre une étape de :
f) équipement du capteur avec un écrou apte à permettre le montage du capteur sur le véhicule automobile.

## Claims

1. High temperature sensor (1), notably designed to be used on a motor vehicle, comprising:
- a sensitive element (10),
- two wires for conducting electric current (20) capable of connecting the sensitive element to a cable (60) having two channels (61, 62),
- a body forming the probe (40) capable of receiving at least one subassembly comprising the sensitive element and the two conductor wires,
**characterized in that** the sensor also comprises a casing (31, 32) called the "assembly" casing in at least two portions, capable of being positioned between the body forming the probe and the subassembly.

2. Sensor according to Claim 1, **characterized in that** the two portions of the sensor are symmetrical in mirror image with one another, relative to a plane comprising a main axis of the casing.

3. Sensor according to Claim 1 or 2, **characterized in that** the sensor is ceramic.

4. Sensor according to one of Claims 1 to 3, **characterized in that** the casing (31, 32) is stepped.

5. Sensor according to one of Claims 1 to 4, **characterized in that** the section of the casing (31, 32) is complementary to that of the body (40).

6. Sensor according to one of Claims 1 to 5, **characterized in that** the two portions (31, 32) of the casing are recessed in order to receive the conductor wires (20) and the sensitive element (10).

7. Method for assembling a sensor according to one of Claims 1 to 6, **characterized in that** the method has steps of:
a) welding of the two conductor wires to the sensitive element so as to form the subassembly,
b) installation of the above subassembly in one of the two portions of the casing,
c) assembly of the other of the two portions of the casing to the above installation, and
d) installation of the above assembly in the body forming the probe.

8. Method according to Claim 7, **characterized in that**, prior to the installation of step b, the two conductor wires are welded to a two-channel cable (60).

9. Method according to Claim 8, **characterized in that** the method also comprises a step of:
e) crimping the body forming the probe onto the two-channel cable.

10. Method according to one of Claims 7 to 9, **characterized in that** the method also comprises a step of:
f) equipping the sensor with a nut capable of allowing the sensor to be installed on the motor vehicle.

## Patentansprüche

1. Hochtemperatursensor (1), insbesondere zur Verwendung in einem Kraftfahrzeug bestimmt, der enthält:
- ein Fühlerelement (10),
- zwei Strom leitende Drähte (20), die das Fühlerelement mit einem zwei Kanäle (61, 62) aufweisenden Kabel (60) verbinden können,
- einen die Sonde bildenden Körper (40), der mindestens eine Untereinheit aufnehmen kann, die das Fühlerelement und die zwei Leiterdrähte enthält,
**dadurch gekennzeichnet, dass** der Sensor außerdem ein so genanntes "Einbau"-Gehäuse (31, 32) aus mindestens zwei Teilen enthält, das zwischen dem die Sonde bildenden Körper und der Untereinheit positioniert werden kann.

2. Sensor nach Anspruch 1, **dadurch gekennzeichnet, dass** die zwei Teile des Sensors zueinander spiegelsymmetrisch bezüglich einer Ebene sind, die eine Hauptachse des Gehäuses enthält.

3. Sensor nach Anspruch 1 oder 2, **dadurch gekennzeichnet, dass** der Sensor aus Keramikmaterial ist.

4. Sensor nach einem der Ansprüche 1 bis 3, **dadurch gekennzeichnet, dass** das Gehäuse (31, 32) gestuft ist.

5. Sensor nach einem der Ansprüche 1 bis 4, **dadurch gekennzeichnet, dass** der Querschnitt des Gehäuses (31, 32) komplementär zu demjenigen des Körpers (40) ist.

6. Sensor nach einem der Ansprüche 1 bis 5, **dadurch gekennzeichnet, dass** die zwei Teile (31, 32) des Gehäuses ausgehöhlt sind, um die Leiterdrähte (20) und das Fühlerelement (10) aufzunehmen.

7. Verfahren zum Zusammenbau eines Sensors nach einem der Ansprüche 1 bis 6, **dadurch gekennzeichnet, dass** das Verfahren Schritte aufweist:
a) des Schweißens der zwei Leiterdrähte an das Fühlerelement, um die Untereinheit zu bilden,
b) des Einbaus der vorhergehenden Untereinheit in eines der zwei Teile des Gehäuses,
c) des Zusammenbaus des anderen der zwei Teile des Gehäuses mit dem vorhergehende Einbau, und
d) des Einbaus des vorhergehenden Zusammenbaus in den die Sonde bildenden Körper.

8. Verfahren nach Anspruch 7, **dadurch gekennzeichnet, dass** vor dem Einbau des Schritts b die zwei Leiterdrähte an ein Zweikanal-Kabel (60) geschweißt werden.

9. Verfahren nach Anspruch 8, **dadurch gekennzeichnet, dass** das Verfahren zudem einen Schritt enthält:
e) des Aufquetschens des die Sonde bildenden Körpers auf das Zweikanal-Kabel.

10. Verfahren nach einem der Ansprüche 7 bis 9, **dadurch gekennzeichnet, dass** das Verfahren außerdem einen Schritt aufweist:
f) der Ausrüstung des Sensors mit einer Schraubenmutter, die den Einbau des Sensors in das Kraftfahrzeug ermöglicht.
